# EUROPÄISCHE PATENTSCHRIFT

(11) **EP 1 929 389 B1**
(45) Veröffentlichungstag und Bekanntmachung des Hinweises auf die Patenterteilung: **09.05.2018**
(21) Anmeldenummer: 06793733.4
(22) Anmeldetag: 22.09.2006
(51) Int. Cl.: G05D 1/02

(54) **VERFAHREN ZUM BETREIBEN EINES SELBSTTÄTIG VERFAHRBAREN HAUSHALTSGERÄTS SOWIE VERFAHREN ZUM BETREIBEN EINER BASISSTATION**
METHOD FOR OPERATING AN AUTOMATICALLY DISPLACEABLE DOMESTIC APPLIANCE AND METHOD FOR OPERATING A BASE STATION
PROCÉDÉ PERMETTANT DE FAIRE FONCTIONNER UN APPAREIL ÉLECTROMÉNAGER À DÉPLACEMENT AUTONOME ET PROCÉDÉ PERMETTANT DE FAIRE FONCTIONNER UNE STATION DE BASE

(30) Priorität: 30.09.2005 DE 102005046813
(43) Veröffentlichungstag der Anmeldung: 11.06.2008
(73) Patentinhaber: Vorwerk & Co. Interholding GmbH, 42275 Wuppertal (DE)
(72) Erfinder: LANG, Torsten, 42657 Solingen (DE); POPPEN, Günter, 42477 Radevormwald (DE); SOMMER, Jörg, 50737 Köln (DE); FIESELER, Martin, 45134 Essen (DE); NEUMANN, Christian, 31139 Hildesheim (DE); MATTERS, Patrick, 85716 Unterschleissheim (DE); SCHLISCHKA, Patrick, 42369 Wuppertal (DE)
(74) Vertreter: Rieder, Hans-Joachim
(86) Internationale Anmeldenummer: PCT/EP2006/066613
(87) Internationale Veröffentlichungsnummer: WO 2007/036487

(56) Entgegenhaltungen:
- WO-A-00/38029
- WO-A-99/38056
- GB-A- 2 290 143
- US-A- 5 491 670
- US-A- 5 652 593
- US-A1- 2005 021 179

## Beschreibung

Die Erfindung betrifft zunächst ein Verfahren zum Betreiben eines selbsttätig verfahrbaren Haushaltsgeräts nach den Merkmalen des Oberbegriffes des Anspruches 1.

Ein Bodenstaub-Aufsammelgerät sowie ein Verfahren zum Betreiben eines solchen Geräts ist bspw. aus der DE 10242257 A1 bekannt. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen. In dieser Patentanmeldung ist ein Verfahren beschrieben, bei welchem die Orientierung des Bodenstaub-Aufsammelgeräts anhand eines von einer Basisstation aufgebauten elektromagnetischen Feldes erfolgt.

Aus der WO 00/38029 A1 ist es bekannt, zusätzlich zu einer Basisstation Stationselemente anzuordnen, die durch einen passiven Resonanz-Schwingkreis Signale zurücksenden, die auf den jeweiligen Ort des Stationselementes rückschließen lassen. Das Haushaltsgerät kann sich unter Verarbeitung dieser Signale in dem Raum orientieren, wobei die Stationselemente im Sinne von Reflektoren arbeiten.

Aus der US 5,491,670 A ist ein Haushaltsgerät bekannt, das ein Funksignal aussendet und damit bei einem Stationselement dir Rücksendung eines akustischen Signals auslöst. Dieses Funksignal ist derart individualisiert, dass nur die Rücksendung an einem bestimmten Stationselement ausgelöst wird. Hierdurch kann das bestimmte Stationselement identifiziert werden.

Aus der US 5,652,593 ist es bekannt, zur Orientierung eines Haushaltsgerätes in einem Raum ein Lokalisierungssignal von einem Basismodul aus auszulösen und den Abstand zwischen dem Basismodul und dem Haushaltsgerät zu berechnen. Dadurch, dass auf dem Haushaltsgerät zwei voneinander distanzierte Empfänger angeordnet sind, kann aufgrund des Zeitversatzes, etwa bei einem Akustiksignal, auch die Ausrichtung der Verbindungsachse zwischen den Empfängern zu der Signalquelle und damit die Ausrichtung des Gerätes im Raum bestimmt werden. Im Weiteren ist es aus der US 2005/0021179 A1 bekannt, bei einem mobilen Robotergerät auf Basis eines Zeitverzuges zwischen einem Infrarotsignal und einem Ultraschallsignal die Position zu erkennen. Die Signale werden reflektiert.

Darüber hinaus ist es aus der EP 1462899 A1 bekannt, bei einem im Freien verfahrbaren Fahrzeug Reflektionselemente oder aktivierte Elemente vorzusehen, welche Signale abgeben. Hierdurch sollen Hindernisse vermieden werden.

Ausgehend von dem dargelegten Stand der Technik beschäftigt sich die Erfindung mit der Aufgabenstellung, bei einem verfahrbaren Haushaltsgerät eine vorteilhafte Orientierungsmöglichkeit zu erreichen zur effektiven Reinigung eines Raumes oder Raumabschnittes.

Diese Aufgabe ist beim Gegenstand des Anspruchs 1 gelöst, wobei darauf abgestellt ist, dass ein Stationselement bzw. die Basisstation zur Aussendung eines Signal aktiviert wird, wobei die Aktivierung durch eine direkte Aktivierung des Stationselementes per Fernbedienung, eine indirekte Aktivierung durch die ggf. zusätzlich angeordnete Basisstation oder indirekt über das Gerät oder per Tastendruck an der ggf. zusätzlich angeordneten Basisstation, am Gerät oder auch direkt an dem Stationselement erfolgt, wobei im Falle der indirekten Aktivierung über die Fernbedienung ein Signal von der Basisstation bzw. von dem Gerät zur Aktivierung des betreffenden Stationselementes ausgelöst wird, dass dem Gerät unter einer Mehrzahl von zu reinigenden Räumen oder Raumabschnitten ein bestimmter Raum oder Raumabschnitt vorgegeben wird, wobei zwischen der Basisstation und dem zu reinigenden Raum oder Raumabschnitt liegende Bereiche ohne Berücksichtigung eines Reinigungserfolgs durchfahren werden können und dass die Vorgabe des Raumes durch Aktivierung eines zugeordneten Stationselementes durchgeführt wird.

In jedem, von dem Haushaltsgerät zu befahrenden Raum ist ein Stationselement in Art einer Landmarke platziert, wobei eine gegebenenfalls zusätzlich vorgesehene Basisstation bspw. zum Wiederaufladen des mit einem Akkumulator versehenen Haushaltsgeräts im Sinne der Erfindung als ein Stationselement ausgeführt ist, so dass auch eine solche Basisstation Signale aussendet, die den Ort bzw. den Raum, in welchem die Basisstation stationiert ist, eindeutig identifiziert. Das Haushaltsgerät verfügt über Mittel, um die von den Stationselementen gesendeten Signale auszuwerten und sich infolge dieser Signalauswertung in dem Raum zu orientieren.

Bevorzugt wird hierbei weiter, dass die Stationselemente zueinander und/oder zu der Basisstation distanziert verteilt in einem Raum oder in mehreren Räumen angeordnet werden. So können weiter bspw. mehrere Stationselemente, gegebenenfalls zusätzlich zu einer Basisstation, in einem Raum distanziert zueinander verteilt sein, um einen solchen Raum in Raumabschnitte zu unterteilen. Dies erweist sich insbesondere bei großflächigen oder verwinkelten Räumen als vorteilhaft. Weiter können mittels der Anordnung mehrere zueinander distanzierter Stationselemente auch verschiedene, unterschiedliche Bodenreinigungsmittel aufweisende Haushaltsgeräte der in Rede stehenden Art signalorientiert angesprochen werden.

Auch kann vorgesehen sein, dass die Stationselemente an singulären Stellen des Raumes bzw. der Mehrzahl von Räumen wie Ecken, Vorsprüngen, Durchgängen oder Treppen angeordnet werden. In einer bevorzugten Ausgestaltung des erfindungsgemäßen Verfahrens senden die Stationselemente und/oder die Basisstation Funksignale aus, welche von dem selbsttätig verfahrbaren Haushaltsgerät, bspw. von einem Saug- oder Kehrroboter empfangen werden. Das ausgesendete Funksignal lässt auf den jeweiligen Ort des Stationselements bzw. der Basisstation rückschließen. Darüber hinaus kann mittels eines solchen Signals auch eine genaue Ermittlung des Standorts des Stationselements bzw. der Basisstation in dem Raum erreicht werden, in dem bspw. die Amplitude des Funksignals bspw. bei 433 MHz und/oder die Laufzeitdifferenz zur Auswertung herangezogen wird. Die einzelnen Stationselemente können zur Abstrahlung der Signale von der Basisstation bspw. per Funk angesteuert werden. Auch kann das autonom arbeitende Haushaltsgerät ein Suchsignal, bspw. Funksignal, absenden, auf welches das entsprechende Stationselement mit einem Signal antwortet. Denkbar ist auch eine Ausgestaltung, bei welcher ein Stationselement ansteuerbar ist über eine vorhandene Stromleitung, etwa durch Aufmodulation eines Steuersignals. Die Stationselemente und/oder die Basisstation sind in der Regel zum Betrieb an ein übliches Stromnetz angeschlossen. Die ohnehin in den Räumen verlegten Stromleitungen können durch Aufmodulation eines Steuersignals zugleich als Signalleitung zwischen den einzelnen Stationselementen bzw. zwischen den Stationselementen und der Basisstation dienen.

Es wird auch vorgeschlagen, dass das Gerät jedenfalls zum Zurückkehren zu einer Basisstation oder zum Verfahren von einem ersten Raum in einen zweiten Raum aufgrund von Sensorsignalen, die am Gerät selbst angeordnete Sensoren liefern, an einer Wandbegrenzung entlang verfahren wird. Das Gerät bewegt sich zufolge dieses Verfahrens streng autark ohne dass dieses in Abhängigkeit von der Basisstation oder weiteren Stationselementen ausgesandten Signalen geleitet wird. So kann ein solches taktiles Verfahren dann zur Anwendung kommen, wenn die von der Basisstation und/oder von weiteren Stationselementen ausgesandten Signale abgeschottet sind. Die geräteseitigen Sensoren können in einer Weiterbildung Stoßsensoren und/oder optische Sensoren sein. Die gegebene Begrenzung des Raumes dient durch Erfassung mittels der Sensoren als Orientierung. Da das Gerät auch dann der Wand folgen würde, wenn der direkte Weg insbesondere zur Basisstation aber auch zu einem weiteren Stationselement, welches gegebenenfalls angesteuert werden soll, frei ist, erweist sich ein weiteres Verfahren als vorteilhaft, bei welchem das Verfahren des Geräts an der Wand mit einer Direktorientierung zu der Basisstation oder zu einem Stationselement verbunden wird. Infolgedessen bewegt sich das Gerät bei abgeschottetem Leitsignal der Basisstation oder des Stationselements entlang der Wand, bis das ausgesandte Signal wieder empfangen wird, woraufhin das Gerät selbsttätig sein Verfahrverhalten ändert und dem Leitsignal folgend auf direktem Wege die Basisstation oder das Stationselement anfährt.

Es wird auch vorgeschlagen, dass das Gerät entlang eines Leitfadens verfahren wird, wobei der Leitfaden in oder unter einem Teppich oder Teppichboden verlegt wird oder in bzw. unter einem Hartboden. Dieser Leitfaden kann linien- oder bandartig verlegt sein. Denkbar ist auch eine Lösung bei welcher der Leitfaden durch mehrere, zueinander distanzierte und einen Leitweg bildende Leitpunkte gebildet ist. In vorteilhafter Weise ist dieser Leitfaden metallischer Art und führt zu der Basisstation oder gegebenenfalls zu einem Stationselement. Durch die Anordnung desselben in oder unter einem Teppich oder Teppichboden bzw. im oder unter einem Hartboden ist dieser Leitfaden bevorzugt unsichtbar verlegt. Das autonom arbeitende Gerät verfährt bei Erfassung des Leitfadens selbsttätig entlang desselben bis zur Basisstation bzw. zu dem Stationselement, wobei das Auffinden des Leitfadens in Abhängigkeit von einer gewählten Verhaltensstrategie des Haushaltsgeräts erfolgt. Denkbar ist auch ein Verfahren, bei welchem der Leitfaden schlangenartig verlegt, zur vollständigen Reinigung des Raumes. Auch kann das Gerät unter Nutzung von in einem Teppich oder Teppichboden verteilten, magnetische und/oder elektrostatische Eigenschaften aufweisenden Partikeln verfahren werden. Diese Partikel bilden gemeinsam einen Leitfaden zum Auffinden der Basisstation und/oder eines Stationselements. Weiter können diese Partikel in vorteilhafter Weise auch nachträglich in den Teppich oder Teppichboden eingebracht werden, so dass auch eine Nutzung eines autark arbeitenden Haushaltsgeräts auf bereits verlegten Teppichen bzw. Teppichböden erreicht werden kann. Durch gezielte Auswahl der Bereiche, in die die Partikel eingearbeitet werden, kann eine für das Auge unsichtbare aber für die Sensorik des Haushaltsgeräts erkennbare Spur gelegt werden. Vorgeschlagen wird diesbezüglich weiter, dass die Partikel in den Teppich oder Teppichboden im Rahmen eines üblichen Reinigungsvorganges, enthalten in einem entsprechenden Reinigungsmittel, eingebracht werden. So können bspw. diese Partikel in einem Reinigungspulver oder Reinigungsschaum enthalten sein, welches mittels eines entsprechenden Teppichreinigungsgeräts in den Teppichboden eingearbeitet wird. Eine solche Pulver- bzw. Schaumreinigung ist mit einem abschließenden Absaugen des gereinigten Teppichbodens verbunden. Die eingearbeiteten Leit-Partikel sind hier in einer solchen Anzahl vorgesehen, dass bei einem abschließenden Absaugen des Teppichbodens noch eine für die Leitorientierung des autonomen Haushaltsgeräts ausreichende Restmenge in dem Teppichboden verbleibt, so dass die Spur zur Basisstation oder zu dem Stationselement weiterhin eindeutig gelegt ist.

Um das gezielte Anfahren bestimmter Bereiche bzw. Räume innerhalb einer Umgebung, zum Beispiel einer Wohnung zu erreichen, ist es bekannt, ein autonom arbeitendes Haushaltsgerät zunächst in einem Teach-In Modus bspw. per Fernbedienung entlang einer definierten Strecke zu verfahren, wobei die Fahrbewegungen über die Raddrehungen und weitere Sensoren aufgezeichnet werden. Nach Abschluss der Teach-In-Phase kann ein solches Haushaltsgerät die vorgegebene Strecke selbständig abfahren. Dieses befährt somit immer den gleichen Weg. Ein solches Teach-In-Verfahren ist für den Anwender mit großem Aufwand verbunden. Des Weiteren sind diese Verfahren unflexibel, da ausschließlich der erlernte Weg befahren wird. Weiter ist es bekannt durch Programmierung oder gleichfalls durch Teach-In-Verfahren in dem Prozessor des Haushaltsgeräts eine Karte der Umgebung abzulegen. Mit Hilfe der Überwachung der Raddrehungen und durch Hinzuziehen weiterer Sensorsignale kann die aktuelle Position des Roboters ermittelt und mit der im Speicher abgelegten Karte verglichen werden. Der Einsatz von Kartierungsverfahren beschränkt sich in der Regel auf das Abfahren definierter Bahnen.

Hierzu kann dem Gerät unter einer Mehrzahl von zu reinigenden Räumen oder Raumabschnitten ein bestimmter Raum oder Raumabschnitt vorgegeben wird, wobei zwischen der Basisstation und dem zu reinigenden Raum oder Raumabschnitt liegende Bereiche ohne Berücksichtigung eines Reinigungserfolges durchfahren werden können. Es sind gezielt Räume oder Raumabschnitte bspw. einer Wohnung mittels des autark arbeitenden Haushaltsgeräts reinigbar. Die von dem ursprünglichen Standort des Geräts zu dem Einsatzgebiet zurückgelegte Strecke kann hierbei hinsichtlich einer Reinigung unberücksichtigt bleiben. Denkbar ist jedoch auch, dass das Haushaltsgerät auf diesem Weg die Fahrstrecke gleichzeitig reinigt.

Das Verfahren ist nicht nur zum Verfahren des Geräts von der Basisstation zu einem zu reinigenden Raum oder Raumabschnitt nutzbar, sondern auch zum gezielten Verfahren des Haushaltsgeräts nach Reinigung eines Raumes oder Raumabschnittes zu einem weiteren Raum bzw. Raumabschnitt. Diesbezüglich wird weiter vorgeschlagen, dass die Vorgabe des Raumes durch Aktivierung eines zugeordneten Stationselements durchgeführt wird, wobei weiter das Stationselement in dem Basisraum bzw. Basisraumabschnitt zugleich auch die Basisstation sein kann. Durch die Aktivierung des zugeordneten Stationselements ist dem autarken Haushaltsgerät ein eindeutiges Signal zum Anfahren dieses Raumes bzw. Raumabschnittes gegeben. So können weiter eine Mehrzahl von Stationselementen verteilt in dem Raum oder in den Räumen angeordnet sein, wobei zur Reinigung eines bestimmten Raumes oder Raumabschnittes ein Stationselement aktiviert wird. Die Aktivierung kann hierbei über Tastendruck oder über eine Fernbedienung erfolgen, wobei weiter der Tastendruck an dem autarken Haushaltsgerät oder auch an der Basisstation durchgeführt werden kann. Entsprechend kann auch die Fernbedienung mit der Basisstation oder auch direkt mit dem autarken Haushaltsgerät kommunizieren. Die Basisstation kann hiernach ein für den jeweiligen Raum bzw. Raumabschnitt spezifisches Signal senden bzw. dass eine Landmarke darstellende Stationselement im Zielraum aktivieren, welche Aktivierung auch direkt durch ein Startsignal des autarken Haushaltsgeräts selektiv erfolgen kann. Denkbar ist des Weiteren, dass mehrere Stationselemente zur Vorgabe des Wegs zu dem Raum oder Raumabschnitt aktiviert werden, so dass das autarke Haushaltsgerät entlang eines hierdurch gebildeten Leitweges zu dem Zielraum findet. Auch kann das Gerät zum Verfahren in den Raum oder in den Raumabschnitt mittels eines Leitstrahls oder eines Funksignals geleitet werden, wobei dieser Leitstrahl bzw. dieses Funksignal bspw. von der Basisstation ausgesendet wird. So ist diesbezüglich denkbar, dass die Basisstation in einem langgestreckten Flur stirnseitig desselben angeordnet ist und entlang des Flures einen Leitstrahl sendet, an welchem entlang das Gerät sich orientiert. In Verbindung mit einer Wegstreckenmessung kann hierüber gezielt ein von diesem Flur abzweigender Raum angefahren werden. Auch ist denkbar, dass in dem Zielraum ein weiteres, den Leitstrahl oder das Funksignal der Basisstation kreuzendes Leitsignal ausgesandt wird, so dass das Gerät bei Erfassung dieses, den anzufahrenden Zielraum identifizierendes Signal entsprechend von dem Basisstations-Leitstrahl ablenkt und den Zielraum anfährt. Diesbezüglich erweist es sich weiter als vorteilhaft, dass ein zu reinigender Raum oder Raumabschnitt durch ein Zusatzsignal gekennzeichnet wird. Ein solches Zusatzsignal kann bspw. bei Einfahren des Geräts in den zu reinigenden Raum bzw. in den zu reinigenden Raumabschnitt ausgesandt werden, so weiter bspw. im Bereich eines Türrahmens. Der Empfang eines solchen Zusatzsignals bestätigt dem autarken Gerät den Eintritt in den zu reinigenden Raum, so dass dieser mit der Reinigung beginnen kann, wonach weiter bspw. dieser Raum, ohne ihn innerhalb einer vorgegebenen Zeit zu verlassen, gereinigt wird. So kann weiter bspw. das Zusatzsignal von einem Transponder ausgesendet werden. Dieser kann neben dem den Raum identifizierenden Zusatzsignal auch Informationen in Form eines Zeitstempels speichern, so bspw. um dem autark arbeitenden Gerät den Austritt aus dem Raum vor Ablauf einer vorgegebenen Zeit zu verweigern. Auch kann dieser Zeitstempel dazu benutzt sein, den Eintritt in diesen Raum zu verhindern, sofern dieser Raum bereits vor kurzer Zeit gereinigt wurde.

Alternativ kann vorgesehen sein, dass das Zusatzsignal von einem Magneten mit spezifischer Feldstärke ausgesendet wird. Auch ist denkbar, dass das Zusatzsignal durch Lesen eines Barcodes erhalten wird, wobei bspw. ein entsprechender Barcode am Türrahmen angeordnet sein kann. Weiter alternativ wird vorgeschlagen, dass das Zusatzsignal von einem Stationselement in dem zu reinigenden Raum oder Raumabschnitt ausgesendet wird, in Form eines optischen, akustischen oder magnetischen Signals oder eines Funksignals. So weiter bspw. durch Aufmodulation auf ein dem Leiten des Geräts dienenden Leitstrahl oder Funksignal. Diesbezüglich erweist es sich als vorteilhaft, dass die Auswertung des Signals über Empfang und Auswertung einer Signalamplitude erfolgt. Des Weiteren kann durch dieses Verfahren auch das autark arbeitende Gerät nach einer Unterbrechung, bspw. zur Aufladung des Akkumulators an der in einem anderen Raum platzierten Basisstation, wieder zurück zu dem letzten, noch nicht fertig gereinigten Raum zur Vollendung der Aufgabe geleitet werden.

Es wird auch vorgeschlagen, dass die Basisstation und/oder die Stationselemente Funksignale aussenden wobei die Amplitude des Funksignals, bspw. bei 433 MHz, und/oder die Laufzeitdifferenz zur Auswertung herangezogen wird. Hierbei erweist es sich weiter als vorteilhaft, dass das Gerät einen gerichteten Empfänger aufweist, mittels welchem die ausgesendeten Funksignale der Basisstation und/oder der Stationselemente empfangen werden können. Auch kann das Gerät einen umlaufenden, richtungsunabhängigen Empfänger aufweisen.

Es wird auch vorgeschlagen, dass von den Stationselementen und/oder der Basisstation ein Infrarotsignal ausgesendet wird. Infolgedessen ist ein optisches Verfahren angegeben. Bevorzugt wird hierbei die Amplitude des Infrarotsignals von dem Gerät ausgewertet. Auf dem Gerät können ein oder mehrere gerichtete Empfänger, bzw. ein umlaufender/richtungsunabhängiger Empfänger angebracht sein. Bei gerichtetem Empfang sucht das Gerät das Infrarotsignal durch Drehungen. Auch kann vorgesehen sein, dass an einem Stationselement und/oder einer Basisstation Infrarotsignale in Form von zwei Leitstrahlen mit divergierenden Richtungen ausgesendet werden, so dass hierdurch ein Trichter aufgespannt ist. Hieraus ergibt sich eine große Flächendeckung im Fernbereich, womit eine erhöhte Wahrscheinlichkeit erreicht ist, dass der Leitstrahl durch das Gerät erfasst wird. Eine solche trichterförmige Anordnung zweier Infrarotleitstrahlen ermöglicht die gezielte Einfahrt in die Basisstation. Denkbar ist diesbezüglich auch die Nutzung einer Leserdiode und eines Spiegels zur Strahlaufweitung. Die Leitstrahlen werden in einer an einer Verfahrebene orientierten Ebene ausgesendet, so bevorzugt nahezu in einer horizontalen Ebene in Höhe des autarken Haushaltsgeräts.

Es wird auch vorgeschlagen, dass das Stationselement und/oder die Basisstation einen Ultraschall-Generator aufweisen und die Schallsignale in dem Gerät mittels eines Ultraschall-Wandlers ausgewertet werden. Bevorzugt wird diesbezüglich weiter, dass auf dem Gerät zwei voneinander gesonderte Ultraschall-Mikrofone angeordnet sind und dass die hierdurch aufgenommenen Signale im Hinblick auf eine Phasenverschiebung ausgewertet werden, wobei weiter die Ausgangswerte der Ultraschall-Mikrofone verstärkt werden und einem Phasendetektor zugeführt werden. Aus den ermittelten Werten kann das Gerät den Winkel und die Richtung zwischen seiner Längsachse und der Basisstation bzw. dem Stationselement bestimmen, wozu das Gerät selbst keine Drehung ausführen muss.

Die vorbeschriebenen Verfahren sowohl zum Betreiben eines selbsttätig verfahrbaren Haushaltsgeräts als auch zum Betreiben einer Basisstation und/oder eines weiteren Stationselements sind auch untereinander kombinierbar, wobei das Gerät Verhaltensstrategien besitzt zum Suchen eines Orientierungssignals, sofern dieses abgeschattet oder überdeckt ist oder auch

### Weiter auf Seite 11, oben, der ursprünglich eingereichten Unterlagen

zum Ausweichen bei Hinderniskontakt, wenn das Orientierungssignal empfangen oder nicht empfangen wird. Insbesondere beim Hindernisverhalten verfügt das Gerät über Verhaltensstrategien, die das Umfahren des Hindernisses ermöglichen, auch wenn das Gerät dafür das Basissignal zwischenzeitlich verliert. Des Weiteren
können Verfahren für den Fernbereich, bspw. zur Leitung des Geräts in einen bestimmten Raum, und für den Nahbereich, bspw. nach Auffinden des Raumes zum direkten Anfahren einer Station, kombiniert werden.

Nachstehend ist die Erfindung anhand der beigefügten Zeichnungen, welche lediglich Ausführungsbeispiele darstellen, näher erläutert. Es zeigt:
- Fig. 1: In perspektivischer Darstellung ein selbsttätig verfahrbares Haushaltsgerät in Form eines Bodenstaub-Aufsammelgeräts:
- Fig. 2: eine schematische Darstellung einer, mehrere Räume aufweisenden Wohnung mit einer Basisstation und jeweils einem weiteren Raum zugeordneten Stationselementen, ein erstes Verfahren zum Betreiben des Haushaltsgeräts betreffend;
- Fig. 3: eine der Fig. 2 entsprechende schematische Darstellung, jedoch ein zweites Verfahren zum Betreiben des Haushaltsgeräts betreffend;
- Fig. 4: eine weitere der Fig. 2 entsprechende Darstellung, ein Verfahren in einer dritten Ausführungsform betreffend;
- Fig. 5: eine schematische Darstellung zweier benachbarter Räume, ein Verfahren zum Betreiben des Haushaltsgeräts in einer weiteren Ausführungsform darstellend;
- Fig. 6: eine weitere schematische Darstellung einer, mehrere Räume aufweisenden Wohnung zur Darstellung eines Verfahrens zum Betreiben des Haushaltsgeräts in einer weiteren Ausführungsform;
- Fig. 7: eine schematische Darstellung einer Basisstation bzw. eines Stationselements und eines selbsttätig verfahrbaren Haushaltsgeräts, ein erstes Verfahren zum Betreiben der Basisstation bzw. des Stationselements betreffend;
- Fig. 8: eine schematische Darstellung gemäß Fig. 7, betreffend eine zweite Ausführungsform zum Betreiben der Basisstation bzw. des Stationselements.

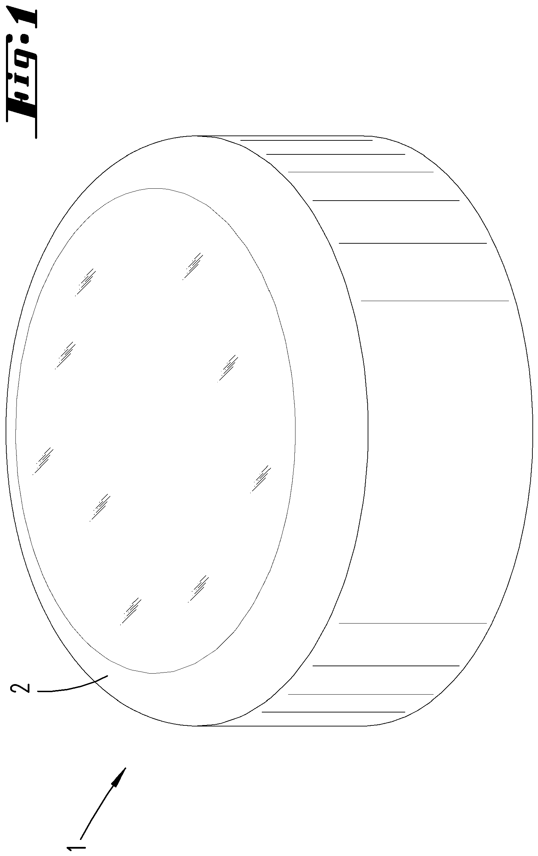

Fig. 1 zeigt ein selbsttätig verfahrbares Haushaltsgerät in Form eines Reinigungsroboters. Dieses besitzt ein Chassis, welches unterseitig, dem zu pflegenden Boden zugewandt, elektromotorisch angetriebene Verfahrräder sowie eine über die Unterkante des Chassisbodens hinausragende, gleichfalls elektromotorisch angetriebene Bürste trägt. Das Chassis ist überfangen von einer Gerätehaube 2, wobei das Haushaltsgerät 1 einen kreisförmigen Grundriss aufweist. Bezüglich der Ausgestaltung des Haushaltsgeräts 1 wird auf die eingangs erwähnte DE 10242257 A1 verwiesen.

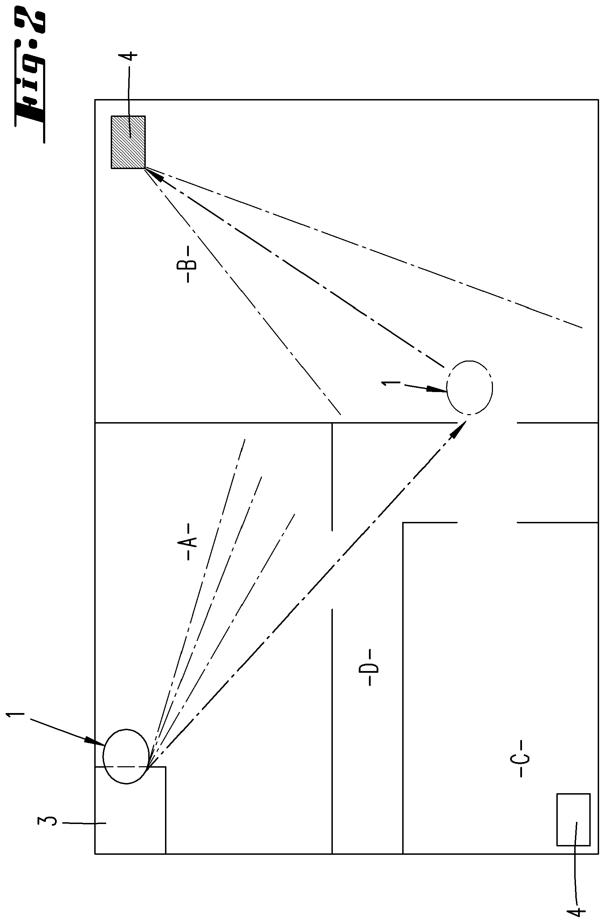

Anhand der Darstellungen in den Fig. 2 bis 6 werden unterschiedliche Verfahren zum Betreiben des selbsttätig verfahrbaren Haushaltsgeräts 1 in einem Raum bzw. in einer Mehrzahl von Räumen beschrieben.

So sind zunächst in den Darstellungen der Fig. 2 bis 4 ein Wohnungsgrundriss schematisch dargestellt, welche Wohnung drei über einen L-förmig verlaufenden Flur D anfahrbare Räume A, B und C aufweist, wobei in allen drei Ausführungsformen in dem Raum A eine Basisstation 3 platziert ist, an welcher Basisstation 3 ein Aufladen des das Gerät 1 antreibenden Akkumulators und darüber hinaus gegebenenfalls auch eine Entleerung eines Staubaufsammelbehälters erfolgen kann.

In der in Fig. 2 dargestellten ersten Ausführungsform eines Verfahrens zum Betreiben des Haushaltsgeräts 1 sind neben dem, mit der Basisstation 3 versehenen Raum A auch die weiteren Räume B und C mit Stationselementen 4 versehen, welche Signale, bspw. Funksignale aussenden, die auf dem jeweiligen Ort des Stationselements 4 rückschließen lassen. Das Haushaltsgerät 1 orientiert sich unter Verarbeitung dieser Signale in dem jeweiligen Raum. In Fig. 2 ist beispielhaft das eine Landmarke ausformende Stationselement 4 des Raumes B aktiviert, wobei diese Aktivierung auf unterschiedliche Art und Weise erfolgen kann. So kann bspw. der Bediener per Fernbedienung direkt dieses Stationselement 4, indirekt über die Basisstation 3 oder auch weiter alternativ indirekt über das Gerät 1 aktivieren, wobei bei den zwei letztgenannten Möglichkeiten über diese Fernbedienung ein Signal von der Basisstation 3 bzw. von dem Gerät 1 zur Aktivierung des betreffenden Stationselements 4 ausgelöst wird. Weiter alternativ kann eine solche Aktivierung auch per Tastendruck an der Basisstation 3, am Gerät 1 oder auch direkt an dem Stationselement 4 erfolgen.

Mittels des aktivierten Stationselements 4 erfolgt eine Orientierung des Geräts 1 in dem Raum B, wobei das Gerät 1 bei Aussenden von Funksignalen seitens des Stationselements 4 die Amplitude dieses Funksignals, bspw. bei 433 MHz, und/oder die Laufzeitdifferenz zur Auswertung heranzieht. Im Sinne der Erfindung agiert auch die Basisstation 3 in Art eines Stationselements 4, in dem die Basisstation 3 neben ihrer Funktion eines Parkplatzes für das Gerät 1 auch zur Orientierung des Geräts 1 in dem Raum A dient.

Des Weiteren kann durch Aktivierung eines raumspezifischen Stationselements 4 auch ein direktes Anfahren dieses Raumes erreicht werden. Hierbei wird dem Gerät unter einer Mehrzahl von zu reinigenden Räumen (A, B oder C) ein bestimmter Raum (hier Raum B) vorgegeben, wobei zwischen der Basisstation 3 und dem zu reinigenden Raum B liegende Bereiche, wie bspw. der Raum A und der Flur D ohne Berücksichtigung eines Reinigungserfolgs durchfahren werden können. Das Gerät 1 wird bei Aktivierung desselben bspw. durch einen von der Basisstation 3 ausgehenden Leitstrahl oder Funksignal in den Flur D geleitet, wonach das Gerät 1, gegebenenfalls unter Anwendung unterschiedlicher Verhaltensstrategien, ein bspw. mit einem aufmodulierten Befehlssignal versehenes Signal eines Stationselements 4 erfasst und diesem entlang in den zu reinigenden Raum folgt.

So kann weiter das von dem Stationselement 4 in dem Raum B geleitete Gerät 1 zunächst dieses Stationselement 4 anfahren, wonach der eigentliche Reinigungsprozess in dem Raum B durchgeführt wird.

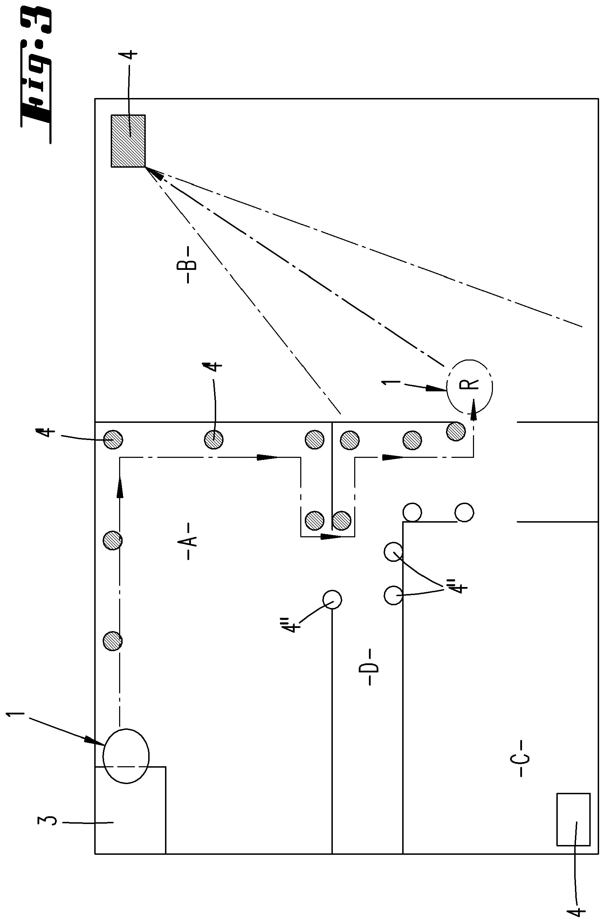

Weiter alternativ kann das Auffinden eines zu reinigenden Raumes bzw. das Auffinden des diesen Raum definierenden Stationselements 4 durch Vorgabe des Wegs mittels mehrerer, gegebenenfalls linienartig hintereinander geschalteter Stationselementen 4' erfolgen, welche bevorzugt lediglich ein Leitsignal aussenden, so dass das Gerät 1 sich entlang dieser Aneinanderreihung von Leitsignalen bzw. Stationselementen 4' bewegt, bis dieses das Signal des raumspezifischen Stationselements 4 erfasst. Eine solche Lösung ist in Fig. 3 schematisch dargestellt. Es ist zu erkennen, das Leitsignal führende Stationselemente 4' zum Führen des Geräts 1 zum Raum B aktiviert sind. Hingegen sind weitere Stationselemente 4" zum Leiten des Geräts in den Raum C deaktiviert. Die in dem Flur D angeordneten Stationselemente 4' bzw. 4" formen eine Weiche zum Auffinden der jeweils aktivierten Räume B oder C aus.

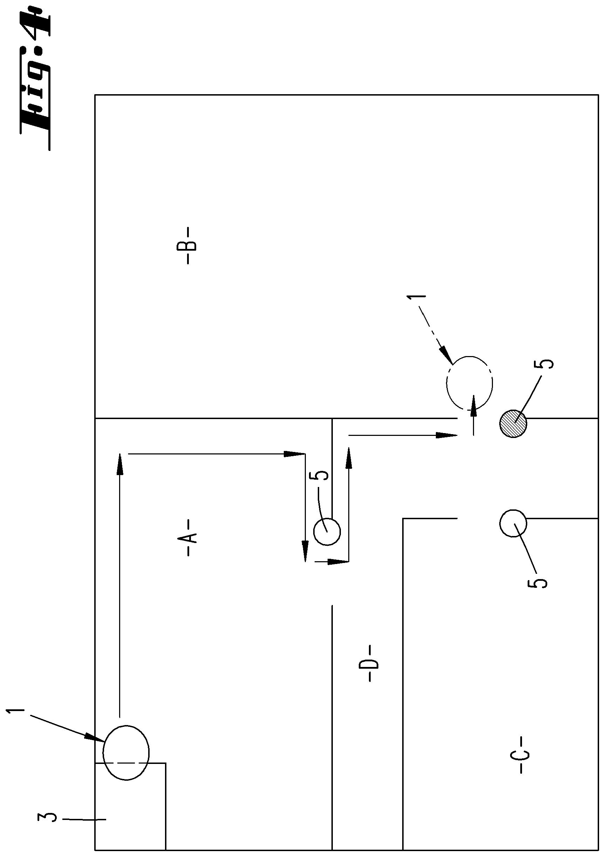

Der zu reinigende Zielraum kann auch durch ein, bspw. von einem Transponder 5 ausgesendeten Zusatzsignal definiert sein. Ein entsprechendes Ausführungsbeispiel eines solchen Verfahrens ist in Fig. 4 beispielhaft dargestellt. Jedem Raum A, B und C ist jeweils ein Transponder 5 zugeordnet, wobei eine
Anordnung desselben im Bereich des Raumzutritts, so bspw. im Bereich des Türrahmens bevorzugt ist. Das Zusatzsignal des Transponders kann von einem Magneten mit spezifischer Feldstärke ausgesendet werden. Auch kann der Transponder 5 dahingehend ausgebildet sein, dass dieser auch Informationen in Form eines Zeitstempels abspeichern kann, so bspw. den Zeitpunkt des Geräteeintritts und gegebenenfalls den Zeitpunkt des Geräteaustritts in bzw. aus dem zugeordneten Raum.

Des Weiteren kann das den zu befahrenden Raum identifizierende Zusatzsignal auch durch Lesen eines Barcodes erhalten werden, welcher Barcode bspw. im Bereich des Türrahmens rahmenseitig oder auch bodenseitig angeordnet sein kann.

Das Auffinden des durch den aktivierten Transponder 5 vorgegebenen Raumes kann auf unterschiedliche Weise erfolgen, so bspw. durch ein von der Basisstation oder einen weiteren Stationselement gerichtetes Leitsignal oder auch weiter bspw. durch ein taktiles Verhalten. Die Aktivierung des Transponders 5 erfolgt entsprechend der Aktivierung eines raumspezifischen Stationselements gemäß der anhand der Fig. 2 beschriebenen Ausführung.

Weiter ist bevorzugt, dass nach Einfahren des Gerätes 1 in den durch einen aktivierten Transponder 5 definierten Raum das Gerät 1 diesen Raum nicht innerhalb einer vorgegebenen Zeit verlässt, womit eine vollständige Bodenreinigung dieses Raumes gewährleistet ist. Diese Zeitüberwachung kann durch das Gerät 1 selbst oder auch durch den, die Ausfahrt aus dem Raum verhindernden Transponder 5 überwacht werden. So ist weiter der Transponder 5 angepasst an die Größe des diesen zugeordneten Raumes mit einem Zeitfenster versehen, welches bei Eintritt des Gerätes 1 aktiviert wird und innerhalb welches ein Verlassen des Raumes verhindert wird.

Eine Unterbrechung des Reinigungsvorganges innerhalb eines Raumes, bspw. zum Aufladen der Akkumulatoren an der Basisstation 3, wird auch über den Transponder 5 erfasst, wozu dieser gegebenenfalls aufgrund eines vom Gerät 1 ausgesandten Signals (Akkulumator schwach) die Ausfahrt aus dem zu reinigenden Raum erlaubt und nach einem Wiederaufladen der Akkumulatoren den Wiedereintritt in den Raum anfordert, um hier den Reinigungsvorgang zu vollenden. Diese Wiederanforderung des Geräts nach einer Unterbrechung eines Reinigungsvorganges ist auch im Zusammenhang mit in den einzelnen Räumen angeordneten Stationselementen 4 denkbar.

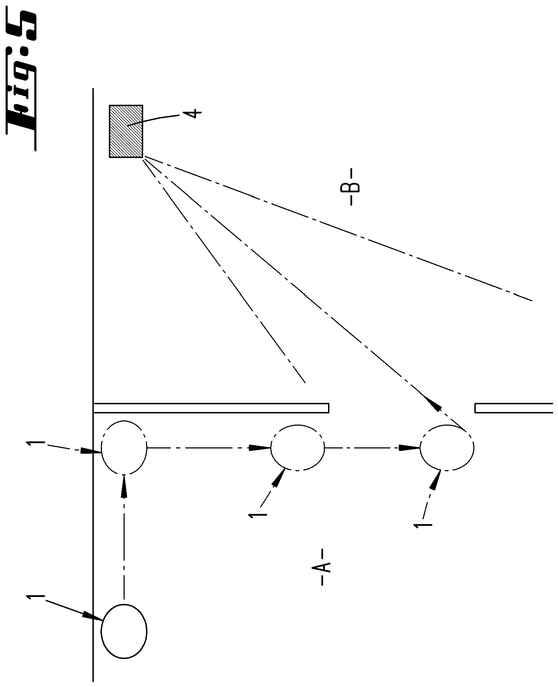

Des Weiteren kann das Gerät 1, wie in Fig. 5 schematisch dargestellt, zum Zurückkehren zur Basisstation 3 oder auch zum Verfahren von einem ersten Raum A in einen zweiten Raum B mittels Sensorsignalen, die am Gerät 1 selbst angeordnete Sensoren liefern, an einer Wandbegrenzung entlang verfahren, wobei die Sensoren des Geräts Stoßsensoren und /oder optische Sensoren sind. Eine entsprechend einprogrammierte Verhaltensstrategie des Geräts 1 bewirkt das Entlangfahren desselben an der Wandbegrenzung. Dieses taktile Verfahren ist bevorzugt mit einem weiteren Verfahren, wie anhand der zuvor beschriebenen verschiedenen Ausführungsbeispiele erläutert, kombiniert, so dass dieses taktile Verfahren an der Wand mit einer Direktorientierung zu der Basisstation 3 bzw. zu einem Stationselement 4 verbunden ist. Diese Direktorientierung erfolgt mittels eines von der Basisstation 3 bzw. von dem Stationselement 4 ausgesandten optischen, akustischen oder magnetischen Signals oder darüber hinaus eines Funksignals. Entsprechend ist das Gerät mit einer Verhaltensstrategie für das Suchen eines derartigen Orientierungssignals, sofern dieses abgeschattet oder überdeckt ist, versehen. So reagiert das Gerät 1 bei Nichtempfang eines derartigen Orientierungssignals zum Zurückfinden bzw. zum Auffinden der Basisstation 3 bzw. eines Stationselements 4 mit einem taktilen Verhalten.

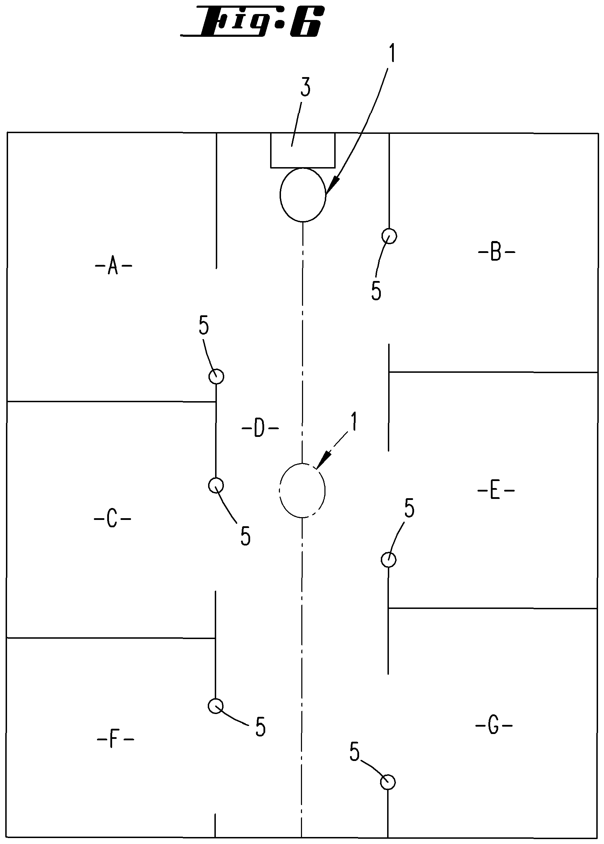

Auch kann das Gerät 1, wie schematisch in Fig. 6 dargestellt, zum Verfahren einen Raum mittels eines von der Basisstation 3 bzw. von einem Stationselement 4 ausgesandten Leitstrahls oder Funksignals geleitet werden. In Fig. 6 ist eine Raumanordnung dargestellt, mit einem langgestreckten Flur D und beidseitig dieses Flures D angeordneten Räumen A bis C und D bis G. In dem langgestreckten Flur D ist stirnseitig eine Basisstation 3 angeordnet, welche bei Aktivierung einen Leitstrahl oder ein Funksignal geradlinig durch den Flur D sendet, entlang dessen das Gerät 1 zunächst verfährt. Die Erkennung des zu reinigenden Raumes kann durch Aktivierung eines in dem Raum angeordneten Stationselements 4 erfolgen, dessen ausgesandtes Signal im Zuge des Fahrens entlang des von der Basisstation 3 ausgesandten Leitstrahls erfasst wird, was das Gerät 1 veranlasst entsprechend die Verfahrrichtung zu ändern. Auch können, wie schematisch dargestellt, in den Raumzutrittsbereichen (Türrahmen) Transponder 5 zur Identifizierung der Räume angeordnet sein, deren Aktivierung bspw. über ausgesandte Funksignale durch das Gerät erkannt wird. Alternativ kann auch bei einem Verfahren des Geräts 1 entlang des Leitstrahls eine Wegstreckenmessung im Bereich der geräteseitigen Verfahrräder erfolgen, wobei zu den einzelnen Räumen entsprechende Wegstrecken in dem Gerät abgespeichert sind.

Die vorbeschriebenen verschiedenen Verfahren zum Betreiben des Haushaltsgeräts sind miteinander kombinierbar. Das Haushaltsgerät 1 bekommt jeweils die Anweisung einen bestimmten Raum in der Wohnung anzufahren, wobei die Anweisung direkt über Tastendruck oder über eine Fernbedienung erfolgen kann. Gleichzeitig bekommt die Basisstation 3 das Signal, so dass diese wiederum ein für den jeweiligen Raum spezifisches Signal sendet. Alternativ aktiviert die Basisstation 3 ein Stationselement 4 im Zielraum, wobei weiter dieses Stationselement 4 auch direkt durch das Startsignal über eine Fernbedienung oder
über das Gerät 1 per Funk selektiv aktiviert werden kann. Auch die Aktivierung eines Stationselementes 4 im Zielraum oder mehrerer Stationselemente 4' bzw. 4" entlang des Weges zum Zielraum über Power-Line-Communication ist denkbar.

Das Gerät 1 bewegt sich hiernach bis dieses den Zielraum erreicht hat, wobei unterschiedliche Fahrverhalten und Orientierungen des Geräts 1 gegebenenfalls kombiniert zur Anwendung kommen. So kann sich das Gerät 1 durch zufällige Fahrt oder Fahren entlang von Raumbegrenzungen wie Wände oder Möbel in einer Drehrichtung vorbewegen. Auch kann sich das Gerät an einem an der Basisstation 3 oder einem anderen aktivierten Stationselement 4 ausgesandten Leitstrahl orientieren. Das Gerät 1 aktiviert im Zielbereich positionierte Stationselemente, welche ein Signal zurücksenden. Aus der Laufzeitdifferenz wird der Abstand zwischen Gerät 1 und Zielraum ermittelt. Durch kontinuierliche oder getaktete Messung kann erkannt werden, ob sich das Gerät 1 zum Zielraum hinbewegt oder sich entfernt. Auch kann mit Hilfe einer ausgelagerten Positionserfassung, bspw. in der Basisstation 3, das Gerät 1 über eine automatische Funkfernsteuerung zum Zielraum geleitet werden. Weiter alternativ bewegt sich das Gerät über eine Reihe von Leitsignalen bzw. Stationselementen, die gezielt von der Basisstation 3 oder von der Fernbedienung oder direkt vom Gerät 1 aktiviert werden zum Zielraum. Der Zielraum kann durch ein Zusatzsignal erkannt werden, welches das Gerät 1 bspw. beim Durchfahren eines Türrahmens erhält, so bspw. durch Anordnung eines Transponders mit raumspezifischer Information, Anordnung eines Magneten mit spezifischer Feldstärke und Erkennung durch Hall-Sensoren oder auch durch Anordnung eines Barcodes am Türrahmen oder im Boden. Auch kann der Zielraum durch ein von dem in dem Zielraum aktivierten Stationselement 4 ausgesandten Zusatzsignal erkannt werden, welches Zusatzsignal ein Leitstrahl, eine Leitakustik, ein Mag-netfeld oder auch ein Funksignal sein kann. Hierbei erfolgt eine Auswertung
der Signalamplitude.

Weiter werden bevorzugt modulierte Signale eingesetzt.

Des Weiteren ist das erfindungsgemäße Verfahren mit einem Suchverhalten gekoppelt, sofern kein Signal empfangen wird. Auch ist eine Kopplung mit einem Hindernisverhalten vorgesehen, sofern das Signal zwar empfangen wird, der direkte Weg zum Ziel jedoch unpassierbar ist. So verfügt das Gerät 1 über Verhaltensstrategien, die das Umfahren des Hindernisses ermöglichen auch wenn dieses dafür das Leitsignal zwischenzeitlich verliert.

Die Basisstation 3 und/oder die Stationselemente 4 können Funksignale aussenden, wobei die Amplitude des Funksignals, bspw. bei 433 MHz, und/oder die Laufzeitdifferenz zur Auswertung herangezogen wird, wozu weiter das Gerät 1 einen gerichteten oder einen umlaufenden, richtungsunabhängigen Empfänger aufweist.

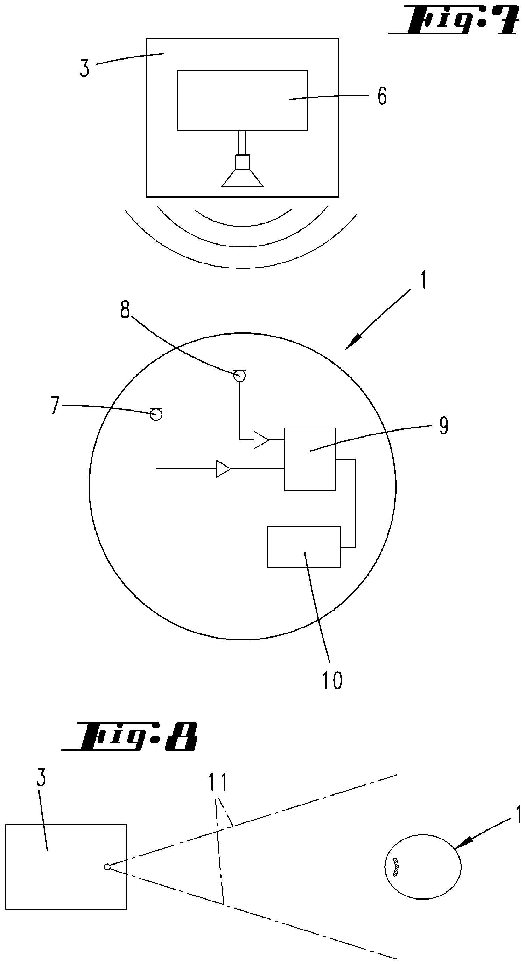

Auch kann, wie in Fig. 7 schematisch dargestellt, die Basisstation 3 bzw. ein Stationselement 4 einen Ultraschall-Generator 6 aufweisen. Auf dem Gerät 1 befinden sich zum Empfang der Ultraschall-Signale zwei Ultraschall-Mikrofone 7, 8, welche symmetrisch zur Längsachse des Roboters angeordnet sind. Das Ultraschall-Signal, welches in der Basisstation 3 bzw. dem Stationselement 4 erzeugt wird, wird von beiden Mikrofonen empfangen. Die Signale der Mikrofone 7, 8 werden verstärkt und einem Phasendetektor 9 zugeführt, welcher eine Spannung ausgibt, die proportional zur Phasenverschiebung zwischen den beiden empfangenen Ultraschall-Signalen ist. Die Spannung wird einem Mikrokontroler 10 zugeführt und dort ausgewertet.

Die Spannung ist null, sofern die Längsachse des Geräts 1 zur Ultraschallaussendenden Basisstation 3 bzw. Stationselement 4 hin ausgerichtet ist. Aus den Vorzeichen und der Größe der Spannung kann das Gerät den Winkel und die Richtung zwischen dessen Längsachse und der Station bestimmen, womit eine Peileinrichtung hoher Genauigkeit gegeben ist, die es ermöglicht, die Station auf den kürzesten Weg anzusteuern.

Auch kann die Basisstation 3 bzw. ein aktiviertes Stationselement 4 ein Infrarotsignal aussenden, welches, wie in Fig. 8 schematisch dargestellt, bevorzugt in Form von zwei Leitstrahlen 11 mit divergierenden Richtungen ausgesendet wird, wobei weiter diese Leitstrahlen in einer an einer Verfahrebene orientierten Ebene ausgesendet werden. Die beiden Infrarot-Leitstrahlen spannen einen Trichter auf, womit eine große Flächendeckung im Fernbereich erreicht ist. Hieraus ergibt sich eine erhöhte Wahrscheinlichkeit, dass das Gerät 1 den Leitstrahl erfasst. Diese trichterförmige Anordnung ermöglicht des Weiteren die gezielte Einfahrt in die Basisstation, bspw. zum Aufladen des Akkumulators.

Die verschiedenen Verfahren zum Betreiben einer Basisstation 3 bzw. eines Stationselements 4 sind untereinander kombinierbar und darüber hinaus auch kombinierbar mit den unterschiedlichen Verfahren zum Betreiben des Geräts 1 in einem Raum oder in einer Mehrzahl von Räumen.

Gegenstand der Erfindung, der sowohl allein als auch in Kombination mit einem der vorbeschriebenen Merkmale Bedeutung haben kann, ist auch ein Verfahren, bei welchem die Stationselemente 4 zueinander und/oder zu der Basisstation 3 distanziert verteilt in einem Raum A-G oder in mehreren Räumen A-G angeordnet werden.

Gegenstand der Erfindung, der sowohl allein als auch in Kombination mit einem der vorbeschriebenen Merkmale Bedeutung haben kann, ist auch ein Verfahren, bei welchem die Stationselemente 4 an singulären Stellen des Raumes A-G bzw. der Mehrzahl von Räumen A-G wie Ecken, Vorsprüngen, Durchgängen oder Treppen angeordnet werden.

Gegenstand der Erfindung, der sowohl allein als auch in Kombination mit einem der vorbeschriebenen Merkmale Bedeutung haben kann, ist auch ein Verfahren, bei welchem ein Stationselement 4 ansteuerbar ist über eine vorhandene Stromleitung, etwa durch Aufmodulation eines Steuersignals.

Gegenstand der Erfindung, der sowohl allein als auch in Kombination mit einem der vorbeschriebenen Merkmale Bedeutung haben kann, ist auch ein Verfahren, bei welchem die Sensoren Stoßsensoren und/oder optische Sensoren sind.

Gegenstand der Erfindung, der sowohl allein als auch in Kombination mit einem der vorbeschriebenen Merkmale Bedeutung haben kann, ist auch ein Verfahren, bei welchem das Verfahren an der Wand mit einer Direktorientierung zu der Basisstation 3 oder zu einem Stationselement 4 verbunden wird.

Gegenstand der Erfindung, der sowohl allein als auch in Kombination mit einem der vorbeschriebenen Merkmale Bedeutung haben kann, ist auch ein Verfahren, bei welchem gegebenenfalls ergänzend zu einer Einarbeitung mit einem Reinigungsmittel, die Partikel in Form einer Spur zur Basisstation 3 hin verlegt werden.

Gegenstand der Erfindung, der sowohl allein als auch in Kombination mit einem der vorbeschriebenen Merkmale Bedeutung haben kann, ist auch ein Verfahren, bei welchem eine Mehrzahl von Stationselementen (4) verteilt in dem Raum A-G oder in den Räumen A-G angeordnet sind und dass zur Reinigung eines bestimmten Raumes A-G oder Raumabschnittes ein Stationselement 4 aktiviert wird.

Gegenstand der Erfindung, der sowohl allein als auch in Kombination mit einem der vorbeschriebenen Merkmale Bedeutung haben kann, ist auch ein Verfahren, bei welchem mehrere Stationselemente 4', 4" zur Vorgabe des Wegs zu dem Raum A-G oder Raumabschnitt aktiviert werden.

Gegenstand der Erfindung, der sowohl allein als auch in Kombination mit einem der vorbeschriebenen Merkmale Bedeutung haben kann, ist auch ein Verfahren, bei welchem das Gerät 1 zum Verfahren in den Raum A-G oder in den Raumabschnitt mittels eines Leitstrahls oder eines Funksignals geleitet wird.

Gegenstand der Erfindung, der sowohl allein als auch in Kombination mit einem der vorbeschriebenen Merkmale Bedeutung haben kann, ist auch ein Verfahren, bei welchem ein zu reinigender Raum A-G oder Raumabschnitt durch ein Zusatzsignal gekennzeichnet wird.

Gegenstand der Erfindung, der sowohl allein als auch in Kombination mit einem der vorbeschriebenen Merkmale Bedeutung haben kann, ist auch ein Verfahren, bei welchem das Zusatzsignal von einem Transponder 5 ausgesendet wird.

Gegenstand der Erfindung, der sowohl allein als auch in Kombination mit einem der vorbeschriebenen Merkmale Bedeutung haben kann, ist auch ein Verfahren, bei welchem das Zusatzsignal von einem Magneten mit spezifischer Feldstärke ausgesendet wird.

Gegenstand der Erfindung, der sowohl allein als auch in Kombination mit einem der vorbeschriebenen Merkmale Bedeutung haben kann, ist auch ein Verfahren, bei welchem das Zusatzsignal durch Lesen eines Barcodes erhalten wird .

Gegenstand der Erfindung, der sowohl allein als auch in Kombination mit einem der vorbeschriebenen Merkmale Bedeutung haben kann, ist auch ein Verfahren, bei welchem das Zusatzsignal von einem Stationselement 4 in dem zu reinigenden Raum A-G oder Raumabschnitt ausgesendet wird, in Form eines optischen, akustischen oder magnetischen Signals oder eines Funksignals.

Gegenstand der Erfindung, der sowohl allein als auch in Kombination mit einem der vorbeschriebenen Merkmale Bedeutung haben kann, ist auch ein Verfahren, bei welchem die Auswertung des Signals über Empfang und Auswertung einer Signalamplitude erfolgt.

Gegenstand der Erfindung, der sowohl allein als auch in Kombination mit einem der vorbeschriebenen Merkmale Bedeutung haben kann, ist auch ein Verfahren, bei welchem die Amplitude des Infrarotsignals von dem Gerät 1 ausgewertet wird.

Gegenstand der Erfindung, der sowohl allein als auch in Kombination mit einem der vorbeschriebenen Merkmale Bedeutung haben kann, ist auch ein Verfahren, bei welchem die Leitstrahlen 11 in einer an einer Verfahrebene orientierten Ebene ausgesendet werden.

Gegenstand der Erfindung, der sowohl allein als auch in Kombination mit einem der vorbeschriebenen Merkmale Bedeutung haben kann, ist auch ein Verfahren, bei welchem die Ausgangswerte der Ultraschall-Mikrofone 7, 8 verstärkt werden und einem Phasendetektor 9 zugeführt werden.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Verfahren zum Betreiben eines selbsttätig verfahrbaren Haushaltsgeräts (1) wie ein Bodenstaub-Aufsammelgerät in einem Raum (A-D) oder in einer Mehrzahl von Räumen (A-G), wobei - gegebenenfalls zusätzlich zu einer Basisstation (3) - Stationselemente (4) angeordnet werden, die Signale aussenden, die auf den jeweiligen Ort des Stationselements (4) rückschließen lassenund das Haushaltsgerät (1) sich unter Verarbeitung dieser Signale in dem Raum (A-G) orientiert, **dadurch gekennzeichnet, dass** ein Stationselement (4) bzw. die Basisstation (3) zur Aussendung eines Signal aktiviert wird, wobei die Aktivierung durch eine direkte Aktivierung des Stationselementes per Fernbedienung, eine indirekte Aktivierung durch die ggf. zusätzlich angeordnete Basisstation oder indirekt über das Gerät oder per Tastendruck an der ggf. zusätzlich angeordneten Basisstation, am Gerät oder auch direkt an dem Stationselement erfolgt, wobei im Falle der indirekten Aktivierung über die Fernbedienung ein Signal von der Basisstation (3) bzw. von dem Gerät (1) zur Aktivierung des betreffenden Stationselementes (4) ausgelöst wird, dass dem Gerät (1) unter einer Mehrzahl von zu reinigenden Räumen (A-G) oder Raumabschnitten ein bestimmter Raum (A-G) oder Raumabschnitt vorgegeben wird, wobei zwischen der Basisstation (3) und dem zu reinigenden Raum (A-G) oder Raumabschnitt liegende Bereiche ohne Berücksichtigung eines Reinigungserfolgs durchfahren werden können und dass die Vorgabe des Raumes (A-G) durch Aktivierung eines zugeordneten Stationselementes (4) durchgeführt wird.

2. Verfahren nach Anspruch 1, **dadurch gekennzeichnet, dass** die Stationselemente (4) und/oder die Basisstation (3) Funksignale aussenden.

3. Verfahren nach Anspruch 2, **dadurch gekennzeichnet, dass** die Amplitude des Funksignals, bspw. bei 433 MHz, und/oder die Laufzeitdifferenz zur Auswertung herangezogen wird.

4. Verfahren nach einem der vorhergehenden Ansprüche **dadurch gekennzeichnet, dass** das Gerät (1) jedenfalls zum Zurückkehren zu einer Basisstation (3) oder zum Verfahren von einem ersten Raum (A-G) in einen zweiten Raum (A-G) auf Grund von Sensorsignalen, die am Gerät (1) selbst angeordnete Sensoren liefern, an einer Wandbegrenzung entlang verfahren wird.

5. Verfahren nach einem der Ansprüche 1 bis 3, **dadurch gekennzeichnet, dass** das Gerät (1) entlang eines Leitfadens verfahren wird, wobei der Leitfaden in oder unter einem Teppich oder Teppichboden verlegt wird oder in bzw. unter einem Hartboden und dass zur Bildung des Leitfadens in einem Teppich oder Teppichboden verteilte magnetische und/oder elektrostatische Eigenschaften aufweisende Partikel vorgesehen werden.

6. Verfahren nach Anspruch 5, **dadurch gekennzeichnet, dass** die Partikel in den Teppich oder den Teppichboden im Rahmen eines üblichen Reinigungsvorgangs, enthalten in einem entsprechenden Reinigungsmittel, eingebracht werden.

7. Verfahren nach einem der vorhergehenden Ansprüche, **dadurch gekennzeichnet, dass** das Gerät (1) einen gerichteten Empfänger aufweist.

8. Verfahren nach einem der vorhergehenden Ansprüche, **dadurch gekennzeichnet, dass** das Gerät einen umlaufenden, richtungsunabhängigen Empfänger aufweist.

9. Verfahren nach einem der vorhergehenden Ansprüche, **dadurch gekennzeichnet, dass** von den Stationselementen (4) und/oder der Basisstation (3) ein Infrarotsignal ausgesendet wird.

10. Verfahren nach Anspruch 9, **dadurch gekennzeichnet, dass** an einem Stationselement (4) und/oder einer Basisstation (3) Infrarotsignale in Form von zwei Leitstrahlen (11) mit divergierenden Richtungen ausgesendet werden.

11. Verfahren nach einem der vorhergehenden Ansprüche, **dadurch gekennzeichnet, dass** das Stationselement (4) und/oder die Basisstation (3) einen Ultraschall-Generator (6) aufweist und die Schallsignale in dem Gerät (1) mittels eines Ultraschall-Wandlers ausgewertet werden.

12. Verfahren nach Anspruch 11, **dadurch gekennzeichnet, dass** auf dem Gerät (1) zwei voneinander gesonderte Ultraschall-Mikrofone (7, 8) angeordnet sind und dass die hierdurch aufgenommenen Signale im Hinblick auf eine Phasenverschiebung ausgewertet werden.

## Claims

1. Method for operating an automatically movable domestic appliance (1) such as a floordust collector in a room (A-D) or in a plurality of rooms (A-G), station elements (4) being arranged optionally in addition to a base station (3), said elements transmitting signals that allow the relevant location of the station element (4) to be deduced, and the domestic appliance (1) being oriented in the room (A-G) by processing said signals, **characterised in that** a station element (4) or the base station (3) is activated in order to transmit a signal, the activation being carried out by a direct activation of the station element by remote control, an indirect activation by the optionally additionally arranged base station or indirectly via the appliance or by pressing a button on the optionally additionally arranged base station, on the appliance or also directly on the station element, a signal being generated by the base station (3) or by the appliance (1), in the case of indirect activation via remote control, in order to activate the relevant station element (4), **in that** a specific room (A-G) or room portion among a plurality of rooms (A-G) to be cleaned is specified to the appliance (1), it being possible to travel through regions between the base station (3) and the room (A-G) or room portion to be cleaned without successful cleaning being taken into account, and **in that** the specification of the room (A-G) is carried out by activating an associated station element (4).

2. Method according to claim 1, **characterised in that** the station elements (4) and/or the base station (3) transmit/s radio signals.

3. Method according to claim 2, **characterised in that** the amplitude of the radio signal, for example at 433 MHz, and/or the propagation time difference, is/are used for evaluation.

4. Method according to any of the preceding claims, **characterised in that**, because of sensor signals that are provided by sensors arranged on the appliance (1) itself, the appliance (1) travels in any event along a wall boundary in order to return to a base station (3) or in order to travel from a first room (A-G) into a second room (A-G).

5. Method according to any of claims 1 to 3, **characterised in that** the appliance (1) travels along a guide course, the guide course being laid in or underneath a carpet or carpeted floor or in or underneath a hard floor, and **in that** particles having magnetic and/or electrostatic properties are distributed in a carpet or carpeted floor in order to form the guide course.

6. Method according to claim 5, **characterised in that** the particles, contained in a corresponding cleaning agent, are introduced into the carpet or carpeted floor as part of a conventional cleaning process.

7. Method according to any of the preceding claims, **characterised in that** the appliance (1) has a directed receiver.

8. Method according to any of the preceding claims, **characterised in that** the appliance has a peripheral, non-directional receiver.

9. Method according to any of the preceding claims, **characterised in that** an infrared signal is transmitted by the station elements (4) and/or the base station (3).

10. Method according to claim 9, **characterised in that** infrared signals are transmitted to a station element (4) and/or a base station (3) in the form of two guide beams (11) having diverging directions.

11. Method according to any of the preceding claims, **characterised in that** the station element (4) and/or the base station (3) have/has an ultrasound generator (6) and the sound signals are evaluated in the appliance (1) by means of an ultrasound transducer.

12. Method according to claim 11, **characterised in that** two separate ultrasound microphones (7, 8) are arranged on the appliance (1) and **in that** the signals received thereby are evaluated with respect to a phase shift.

## Revendications

1. Procédé pour faire fonctionner un appareil électroménager à déplacement autonome (1) tel qu'un appareil de collecte de poussière au sol dans une pièce (A-D) ou dans une pluralité de pièces (A-G), dans lequel sont agencés, le cas échéant en plus d'une station de base (3), des éléments formant station (4) lesquels émettent des signaux qui permettent de déduire l'emplacement respectif de l'élément formant station (4) et l'appareil électroménager (1) s'oriente dans la pièce (A-G) grâce au traitement de ces signaux, **caractérisé en ce qu'**un élément formant station (4) ou la station de base (3) est activé (e) pour émettre un signal, dans lequel l'activation est opérée par une activation directe de l'élément formant station par télécommande, une activation indirecte par la station de base agencée le cas échéant en plus ou indirectement via l'appareil ou en appuyant sur un bouton de la station de base agencée le cas échéant en plus, de l'appareil ou directement sur l'élément formant station, dans lequel dans le cas d'une activation indirecte via la télécommande, un signal est déclenché par la station de base (3) ou par l'appareil (1) pour activer l'élément formant station concerné (4), **en ce qu'**une pièce (A-G) ou une section de pièce particulière est spécifiée à l'appareil (1) parmi une pluralité de pièces (A-G) ou de sections de pièce à nettoyer, dans lequel des zones situées entre la station de base (3) et la pièce (A-G) ou la section de pièce à nettoyer peuvent être traversées sans tenir compte d'un résultat de nettoyage, et **en ce que** la spécification de la pièce (A-G) est effectuée en activant un élément formant station associé (4).

2. Procédé selon la revendication 1, **caractérisé en ce que** les éléments formant station (4) et/ou la station de base (3) émettent des signaux radio.

3. Procédé selon la revendication 2, **caractérisé en ce que** l'amplitude du signal radio, par exemple à 433 MHz, et/ou la différence de temps de propagation est/sont utilisée(s) pour l'analyse.

4. Procédé selon l'une des revendications précédentes, **caractérisé en ce que** l'appareil (1) est déplacé dans tous les cas le long d'un mur de délimitation pour retourner à une station de base (3) ou pour se déplacer d'une première pièce (A-G) jusque dans une deuxième pièce (A-G) sur la base de signaux de capteurs que fournissent des capteurs agencés sur l'appareil (1) lui-même.

5. Procédé selon l'une des revendications 1 à 3, **caractérisé en ce que** l'appareil (1) est déplacé le long d'un guide, dans lequel le guide est disposé dans ou sous un tapis ou une moquette ou dans ou sous un plancher dur, et **en ce que** sont prévues des particules réparties ayant des propriétés magnétiques et/ou électrostatiques pour former le guide dans un tapis ou une moquette.

6. Procédé selon la revendication 5, **caractérisé en ce que** les particules sont introduites dans le tapis ou la moquette au cours d'un processus de nettoyage habituel en étant contenues dans un agent de nettoyage correspondant.

7. Procédé selon l'une des revendications précédentes, **caractérisé en ce que** l'appareil (1) comporte un récepteur directionnel.

8. Procédé selon l'une des revendications précédentes, **caractérisé en ce que** l'appareil présente un récepteur périphérique non directionnel.

9. Procédé selon l'une quelconque des revendications précédentes, **caractérisé en ce qu'**un signal infrarouge est émis par les éléments formant station (4) et/ou la station de base (3).

10. Procédé selon la revendication 9, **caractérisé en ce que** des signaux infrarouges sont émis par un élément formant station (4) et/ou une station de base (3) sous la forme de deux faisceaux de guidage (11) avec des directions divergentes.

11. Procédé selon l'une quelconque des revendications précédentes, **caractérisé en ce que** l'élément formant station (4) et/ou la station de base (3) présente un générateur d'ultrasons (6) et les signaux sonores sont analysés dans l'appareil (1) au moyen d'un transducteur d'ultrasons.

12. Procédé selon la revendication 11, **caractérisé en ce que** sur l'appareil (1) sont disposés deux microphones à ultrasons (7, 8) séparés l'un de l'autre et **en ce que** les signaux enregistrés par ce biais sont analysés en termes de décalage de phase.
